(19) Europäisches Patentamt / European Patent Office / Office européen des brevets

(11) **EP 4 597 045 A1**

(12) **EUROPEAN PATENT APPLICATION**
published in accordance with Art. 153(4) EPC

(43) Date of publication:
06.08.2025 Bulletin 2025/32

(21) Application number: 23868252.0

(22) Date of filing: 21.09.2023

(51) International Patent Classification (IPC):
*G01D 5/347* (2006.01)

(52) Cooperative Patent Classification (CPC):
G01D 5/34707; G01D 5/347

(86) International application number:
PCT/JP2023/034256

(87) International publication number:
WO 2024/063131 (28.03.2024 Gazette 2024/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.09.2022 JP 2022151118

(71) Applicant: Dai Nippon Printing Co., Ltd.
Tokyo 162-8001 (JP)

(72) Inventor: IMAI, Tsuyoshi
Tokyo 162-8001 (JP)

(74) Representative: Müller-Boré & Partner
Patentanwälte PartG mbB
Friedenheimer Brücke 21
80639 München (DE)

(54) **REFLECTIVE OPTICAL SCALE FOR ENCODER, REFLECTIVE OPTICAL ENCODER, AND LAMINATE FOR REFLECTIVE OPTICAL SCALE FOR ENCODER**

(57)    The present disclosure provides a reflective type optical scale for encoder including: a high reflection layer, a protective layer, and a low reflection layer arranged in a patterned shape, in a thickness direction, in this order, wherein there are a low reflection region that is a region where the low reflection layer is arranged, and a high reflection region that is a region where the protective layer is exposed, and when d ($\mu$m) designates a thickness of the protective layer, and $\theta$ (°) designates an incident angle of an incident light to the protective layer, below formula (1) is satisfied.

$$d = m\lambda \ / \ [2n * \cos\{\mathrm{Arcsin}(\sin\theta/n)\}] \qquad (1)$$

(In the formula, n is a refraction factor of the protective layer, $\lambda$ is a wavelength ($\mu$m) of the incident light, and m is a number satisfying $0 < m \le 0.3$ or $p-0.3 \le m \le p+0.3$ (p is an integer that is 1 or more and 3 or less.)

EP 4 597 045 A1

**(Cont. next page)**

**FIG. 1**

(a)

(b)

## Description

Technical Field

The present disclosure relates to a reflective type optical scale for encoder, a reflective type optical encoder, and a layered body for reflective type optical scale for encoder.

Background Art

Conventionally, an optical encoder is used in materials such as a servomotor including a control mechanism. There are a transmissive type encoder and a reflective type encoder as the optical encoder, but there are advantages in the reflective type encoder that the optical path is shorter compared to that of the transmissive type encoder, decreasing in size and thickness is easy, and assembling is easy since positional determination of the light emitting element and light receiving element is unnecessary.

The reflective type optical encoder includes a reflective type optical scale, a light source such as LED irradiating light to the scale, and a photodetector detecting a reflected light from the scale. In the reflective type optical scale, a reflection region (high reflection region) and non-reflection region (low reflection region) are disposed alternately, and the reflection coefficient of the light in the reflection region is higher than the reflection coefficient of the light in the non-reflection region. For this reason, the intensity of the light reflected from the scale and incident to the photodetector creates strength and weakness by the change in the position of the scale. The photodetector detects the strength and weakness of the light created by the movement of the position of the scale in the length measurement direction. The reflective type optical encoder processes the displacement information of the position of the scale according to the strength and weakness of the light detected, and can obtain the positional information.

In the reflection region and the non-reflection region formed in the reflective type optical scale, in order to prevent erroneous detection by the photodetector and to improve the detection accuracy of the signals, it is necessary to set the reflection coefficient of the reflection region high, and to set the reflection coefficient of the non-reflection region low.

For example, Patent Document 1 discloses a reflective plate characterize in that, in a reflective plate used for an optical encoder, on a substrate, a reflection layer reflecting light, a protective layer protecting the reflection layer, and a pattern forming layer of which reflection coefficient of light is lower than that of the reflection layer, and in which a slit pattern is formed, are sequentially layered.

Patent Document 2 discloses a reflective type optical scale for encoder in which a high reflection region and a low reflection region are alternately disposed on a substrate for the purpose of sufficiently decreasing a reflection coefficient in the low reflection region, wherein the low reflection region includes a low reflection part including a metal chrome layer disposed on one surface of the substrate, and a chromium oxide layer and a chromium nitride layer disposed randomly on a surface of the metal chrome layer that is opposite side to the substrate, and the high reflection region has a reflection coefficient of light incident from the opposite side to the substrate of the reflective type optical scale or encoder that is higher than a reflection coefficient of the low reflection region.

Citation List

Patent Documents

Patent Document 1: Japanese Patent Application Laid-Open (JP-A) No. 2005-241248
Patent Document 2: WO Publication No. 2021/201024

Summary

Technical Problem

Conventionally, when a low reflection layer in a patterned shape is formed on a high reflection layer including materials such as a metal, the low reflection layer is formed directly on the high reflection layer and, on the low reflection layer, for example, by forming a resist pattern by means such as a photo lithography, and performing etching using the resist pattern as a mask, the low reflection layer in a patterned shape has been obtained. However, at the time of etching the low reflection layer, there have been problems such that the surface of the high reflection layer is roughened and the surface roughness increases, and the etching residue remained on the surface of the high reflection layer to decrease the reflection coefficient of the light incident in the high reflection region. Then, the inventor of the present application has studied about arranging a protective layer between the high reflection layer and the low reflection layer. However, it has been newly found out that there are some cases where the reflection coefficient of the light incident in the high reflection region is degraded even when the protective layer is arranged.

The present invention has been made in view of the above circumstances, and a main object thereof is to provide a reflective type optical scale for encoder capable of improving a reflection coefficient of a light incident in the high reflection region.

Solution to Problem

One embodiment of the present disclosure provides a reflective type optical scale for encoder including: a high reflection layer, a protective layer, and a low reflection layer arranged in a patterned shape, in a thickness direction, in this order, wherein there are a low reflection region that is a region where the low reflection layer is arranged, and a high reflection region that is a region where the protective layer is exposed, and when d ($\mu$m) designates a thickness of the protective layer, and $\theta$ (°) designates an incident angle of an incident light to the protective layer, below formula (1) is satisfied.

$$d = m\lambda \ / \ [2n \ * \ \cos\{Arcsin(sin\theta/n)\}] \qquad (1)$$

(In the formula, n is a refraction factor of the protective layer, $\lambda$ is a wavelength ($\mu$m) of the incident light, and m is a number satisfying $0 < m \leq 0.3$ or $p-0.3 \leq m \leq p+0.3$ (p is an integer that is 1 or more and 3 or less.)

Another embodiment of the present disclosure provides a reflective type optical scale for encoder including: a high reflection layer, a protective layer including an organic material, and a low reflection layer arranged in a patterned shape, in a thickness direction, in this order, wherein there are a low reflection region that is a region where the high reflection layer, the protective layer, and the low reflection layer are arranged, and a high reflection region that is a region where the high reflection layer and the protective layer are arranged; a thickness of the protective layer is 0.16 $\mu$m or more and 1.0 $\mu$m or less; and when a wavelength of a measuring light source is regarded as 850 $\mu$m, a reflection coefficient in the high reflection region is 40% or more.

Another embodiment of the present disclosure provides a reflective type optical scale for encoder including: a high reflection layer, a protective layer including an organic material, and a low reflection layer arranged in a patterned shape, in a thickness direction, in this order, wherein there are a low reflection region that is a region where the high reflection layer, the protective layer, and the low reflection layer are arranged, and a high reflection region that is a region where the high reflection layer and the protective layer are arranged; when a wavelength of a measuring light source is regarded as 850 $\mu$m, a reflection coefficient in the low reflection region is 2% or less; and S/N ratio shown in below formula is 30 or more.

S/N ratio = reflection coefficient of high reflection region / reflection coefficient of low reflection region

Another embodiment of the present disclosure provides a reflective type optical encoder characterized by including the above described reflective type optical scale for encoder; a light source irradiating a measuring beam to a surface where the low reflection layer of the reflective type optical scale for encoder is disposed; and a photodetector detecting a reflected light from the reflective type optical scale for encoder.

Another embodiment of the present disclosure provides a layered body for reflective type optical scale for encoder for producing the above described reflective type optical scale for encoder, the layered body comprising: a high reflection layer, a protective layer, and a layer for forming a low reflection layer, in a thickness direction, in this order, wherein when d ($\mu$m) designates a thickness of the protective layer, and $\theta$ (°) designates an incident angle of an incident light to the protective layer, below formula (1) is satisfied.

$$d = m\lambda \ / \ [2n \ * \ \cos\{Arcsin(sin\theta/n)\}] \qquad (1)$$

(In the formula, n is a refraction factor of the protective layer, $\lambda$ is a wavelength ($\mu$m) of the incident light, and m is a number satisfying $0 < m \leq 0.3$ or $p-0.3 \leq m \leq p+0.3$ (p is an integer that is 1 or more and 3 or less.)

Another embodiment of the present disclosure provides a layered body for reflective type optical scale for encoder for producing the above described reflective type optical scale for encoder, the layered body comprising: a high reflection layer, and a protective layer, in a thickness direction, in this order, wherein when d ($\mu$m) designates a thickness of the protective layer, and $\theta$ (°) designates an incident angle of an incident light to the protective layer, below formula (1) is satisfied.

$$d = m\lambda \ / \ [2n \ * \ \cos\{Arcsin(\sin\theta/n)\}] \qquad (1)$$

(In the formula, n is a refraction factor of the protective layer, $\lambda$ is a wavelength ($\mu$m) of the incident light, and m is a number satisfying $0 < m \leq 0.3$ or $p-0.3 \leq m \leq p+0.3$ (p is an integer that is 1 or more and 3 or less.)

Advantageous Effects

The present disclosure exhibits an effect of providing a reflective type optical scale for encoder capable of improving the reflection coefficient of a light incident in the high reflection region.

Brief Description of Drawings

FIG. 1 is a schematic cross-sectional view exemplifying the reflective type optical scale for encoder in the present disclosure.
FIG. 2 is a schematic perspective view and a partially enlarged view exemplifying the reflective type optical encoder in the present disclosure.
FIG. 3 is a schematic cross-sectional view exemplifying the reflective type optical scale for encoder in the present disclosure.
FIG. 4 is a schematic cross-sectional view exemplifying the reflective type optical scale for encoder in the present disclosure.
FIG. 5 is a graph showing a relation between the thickness of the protective layer and an average reflection coefficient in Experimental Example A and Experimental Example B.
FIG. 6 is a graph showing a relation between the thickness of the protective layer and an average standard reflection coefficient in Experimental Example A and Experimental Example B.
FIG. 7 is a measurement result of the reflection coefficient when the measuring beam wavelength and the incident angle in Examples and Reference Example 1 were changed.
FIG. 8 is a measurement result of the reflection coefficient when the measuring beam wavelength and the incident angle in Comparative Example 1 and Comparative Example 2 were changed.
FIG. 9 is a schematic cross-sectional view of the layered body for reflective type optical scale for encoder in the present disclosure.

Description of Embodiments

The present disclosure includes embodiments of a reflective type optical scale for encoder, a reflective type optical encoder, and a layered body for reflective type optical scale for encoder. Embodiments of the present disclosure will be hereinafter explained with reference to, for example, drawings. However, the present disclosure is enforceable in a variety of different forms, and thus should not be taken as is limited to the contents described in the embodiments exemplified as below. Also, the drawings may show the features of the present disclosure such as width, thickness, and shape of each part schematically comparing to the actual form in order to explain the present disclosure more clearly in some cases; however, it is merely an example, and thus does not limit the interpretation of the present disclosure. Also, in the present description and each drawing, for the factor same as that described in the figure already explained, the same reference sign is indicated and the explanation thereof may be omitted.

In the present description, upon expressing an aspect of arranging one member on the other member, when it is expressed simply "on" or "below", both of when the other member is directly arranged on or below the one member so as to contact with each other, and when the other member is arranged on or below the one member further interposing an additional member, can be included unless otherwise described. Also, in the present descriptions, on the occasion of expressing an aspect wherein some member is placed on the surface of the other member, when described as merely "on the surface side" or "on the surface", unless otherwise stated, it includes both of the following cases: a case wherein some member is placed directly on or directly below the other member so as to be in contact with the other member, and a case wherein some member is placed on the upper side or the lower side of the other member via yet another member.

Also, in the present description, "reflective type optical scale for encoder" may be simply referred to as "optical scale".

The inventor of the present application has, as described above, studied about the problem that the reflection coefficient of the light incident in the high reflection region is degraded even when the protective layer is arranged between the high reflection layer and the low reflection layer. As a result, it has been found out that the reflection coefficient of the light incident in the high reflection region can be improved by adjusting the thickness of the protective layer to be in the specified range where the light reflected in the surface of the protective layer and the light reflected in the interface of the protective layer and the high reflection layer are intensified, and completed the present invention.

Hereinafter, the reflective type optical scale for encoder, the reflective type optical encoder, and the layered body for reflective type optical scale for encoder in the present disclosure will be explained in details.

A-1. Reflective type optical scale for encoder

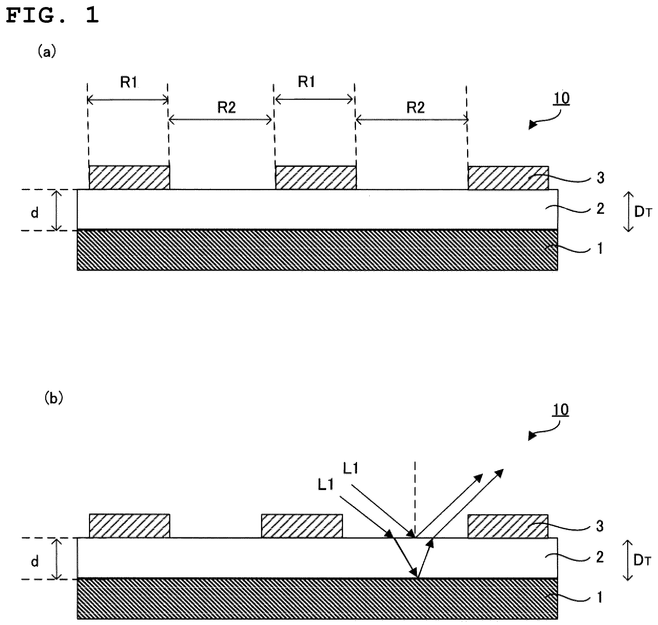

FIG. 1 (a) is a schematic cross-sectional view illustrating an example of the reflective type optical scale for encoder in the present disclosure. The reflective type optical scale for encoder 10 shown in FIG. 1 (a) includes: a high reflection layer 1, a protective layer 2, and a low reflection layer 3 arranged in a patterned shape, in a thickness direction $D_T$, in this order, wherein there are a low reflection region R1 that is a region where the low reflection layer 3 is arranged, and a high reflection region R2 that is a region where the protective layer 2 is exposed. The present disclosure features a configuration in which the thickness d of the protective layer 2 satisfies the specified range. In the reflective type optical scale for encoder in FIG. 1 (a), the low reflection region R1 and the high reflection region R2 are alternately disposed. The low reflection region R1 includes the high reflection layer 1, the protective layer 2, and the low reflection layer 3. The high reflection region R2 includes the high reflection layer 1 and the protective layer 2. Also, FIG. 1 (b) shows a state of the reflective type optical scale for encoder 10 of FIG. 1 (a), to which a measuring beam incidents from the low reflection layer 3 side. The light L1 irradiated from the light source reflects on the surface of the protective layer 2, and in the interface between the high reflection layer 1 the protective layer 2. The reflection coefficient of the light in the high reflection region R2 is higher than the reflection coefficient of the light in the low reflection region R1. Incidentally, the reflection coefficient of the light in the high reflection region R2 and the reflection coefficient of the light in the low reflection region R1 show a reflection coefficient of the same wavelength at the same incident angle.

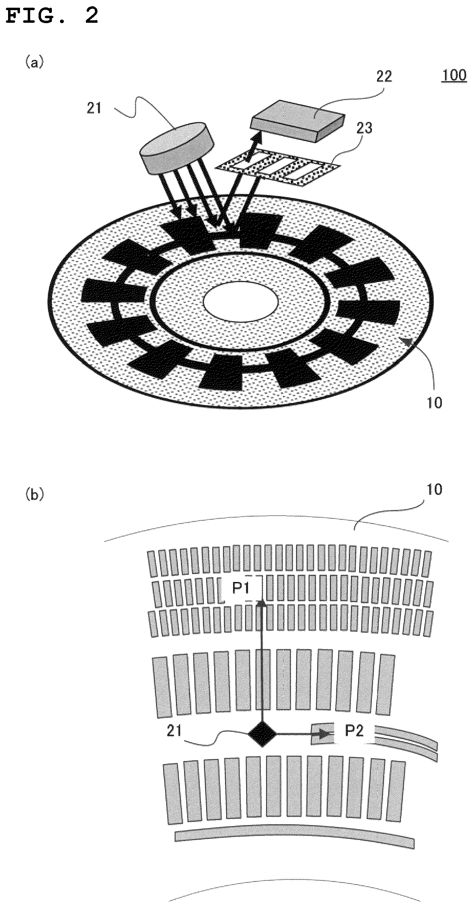

FIG. 2 (a) is a schematic perspective view showing an example of the reflective type optical encoder including the reflective type optical scale for encoder in the present disclosure, and FIG. 2 (b) is a partially enlarged view of the reflective type optical encoder of FIG. 2 (a) viewed from upper direction. The reflective type optical encoder 100 in the present disclosure includes the reflective type optical scale for encoder 10, and further includes, the light source 21, and the photodetector 22. In FIG. 2 (a), fixing slit 23 is disposed between the photodetector 22 and the reflective type optical scale for encoder 10.

In the reflective type optical scale for encoder in the present disclosure, by adjusting the thickness d of the protective layer 2 in the specified range, the reflection coefficient of the light incident in the high reflection region can be improved.

Hereinafter, the reflective type optical scale for encoder of the present disclosure will be described in details.

1. Protective layer

The protective layer in the present disclosure is disposed between the high reflection layer and the low reflection layer. The protective layer has transparency, and also, includes a function of protecting the high reflection layer. By arranging the protective layer, there is no risk of increasing the surface roughness of the high reflection layer on the occasion of etching when the low reflection layer is formed in a patterned shape. As a result, irregular reflection of light can be inhibited.

In the present disclosure, the thickness d ($\mu$m) of the protective layer is adjusted to satisfy the below formula (1), when $\theta$ (°) designates an incident angle of an incident light to the protective layer.

$$d = m\lambda \; / \; [2n \; * \; \cos\{Arcsin(sin\theta/n)\}] \qquad (1)$$

(In the formula, n is a refraction factor of the protective layer, $\lambda$ is a wavelength ($\mu$m) of the incident light, and m is a number satisfying $0 < m \leq 0.3$ or $p\text{-}0.3 \leq m \leq p\text{+}0.3$ (p is an integer that is 1 or more and 3 or less.)

Note that the reason why the reflection coefficient of light incident in the high reflection region can be improved by setting the thickness of the protective layer in the above range is as follows. Since the refraction factor is in the relation of the air < the protective layer < the high reflection layer, each interface develops fixed end reflection, and the phase is shifted in $\pi$. When the phase of the light reflected in the interface between the air and the protective layer, and the phase of the light reflected in the interface between the protective layer and the high reflection layer match, the reflected light can suppress attenuation of the reflection coefficient the most. The condition where the phases of the reflected lights match is when the thickness of the layer satisfies the above formula.

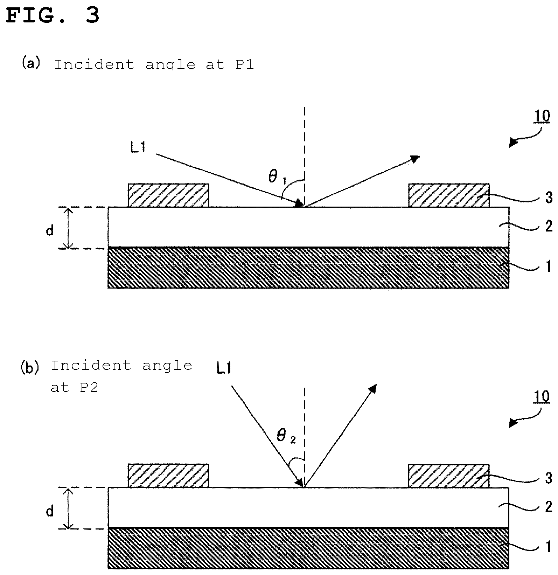

In the formula (1), the incident angle $\theta$ is an incident angle of incident light to the protective layer. As described later, the incident angle of the light may vary depending on the position of the optical scale 10 with respect to the light source 21 (FIG. 3). The incident angle $\theta$ in the formula (1) is an incident angle in a scale position desired to obtain the strongest reflection coefficient (such as a position of the main pattern), and for example, it may be 0°, may be 20°, may be 40°, and may be 55°.

In the formula (1), n is the refraction factor of the protective layer, $\lambda$ is the wavelength ($\mu$m) of the incident light, which is for example, any of the wavelength in the range of 0.38 $\mu$m or more and 1.0 $\mu$m or less, and may be any of the wavelength in the range of 0.50 $\mu$m or more and 1.0 $\mu$m or less.

In the formula (1), m is a number satisfying $0 < m \leq 0.3$ or $p-0.3 \leq m \leq p+0.3$ (p is an integer that is 1 or more and 3 or less). The p is 1, 2, or 3, preferably 1 or 2, and more preferably 1.

As shown in FIG. 2 (b), the incident angle of light may vary depending on the position of the optical scale 10 with respect to the light source 21. FIG. 3 (a) and FIG. 3 (b) are respectively schematic cross-sectional view of an optical scale for explaining the incident angle of light at P1 and the incident angle of light at P2 FIG. 2 (b). As shown in FIG. 3 (a) and FIG. 3 (b), the incident angle $\theta_1$ of light at the position of P1 is larger than the incident angle $\theta_2$ of light at the position of P2 close to the light source 21. The incident angle is an angle formed by a perpendicular line of the surface of the protective layer and the emitted direction of the light L1 from the light source.

In this manner, the inventor of the present application has newly found out that the reflection coefficient largely varies depending on the positions of the high reflection region in the optical scale. In the present disclosure, it is preferable that the m in the formula (1) is in the range of, larger than 0 and 0.3 or less, 0.7 or more and 1.3 or less, 1.9 or more and 2.3 or less, or 3.0 or more and 3.3 or less. When the m is in the above range, variation of the reflection coefficient due to the positions of the high reflection region as described above can be reduced.

The material of the protective layer is not particularly limited if it is a material that has transparency and can protect the high reflection layer, and may be any of an organic material and an inorganic material, but the organic material is preferable.

The reason therefor is that the etching processing to form the shape of the optical scale into a specified shape is easy, and although it depends on the kind of the high reflection layer, close adhesion with the high reflection layer is superior compared to the inorganic material. Also, the protective layer configured by the organic material is excellent in antifouling property, and thus an impurity (contamination) is not easily adhered to the surface, and the close adhesion with the other layer on the surface of the protective layer that is opposite side to the substrate will also be well.

Further, compared to the inorganic material, generation of cracks may be inhibited, and it is easy to adjust to the above described specified thickness. Also, compared to the inorganic material, it is superior in terms of cost. Furthermore, compared to the inorganic material, the contact angle is higher, and thus the antifouling function improves. In specific, the contact angle of the protective layer with respect to water can be in the later described range.

In the present disclosure, the protective layer may be one layer, and may be configured by two layers or more of plurality of layers. When the protective layer is configured by two layers, from the view point of antifouling property, it is preferable that a protective layer configured by the organic material is disposed on the outermost surface side (opposite side to the substrate), and a protective layer configured by the inorganic material is disposed on the other side.

The organic material preferably includes a resin. The resin to be used in the protective layer is not particularly limited if the resin allows the protective layer having transparency to be obtained, and examples thereof may include an ionizing radiation curable resin that is cured by irradiating an ionizing radiation such as an ultraviolet ray and an electron beam, and a thermosetting resin that is cured by heating. In specific, a novolac-based resin, a polyolefin-based resin, a polyester-based resin, a urethane-based resin, a polyimide-based resin, an acryl-based resin, and an epoxy-based resin are preferable. As the novolac-based resin, above all, a phenol novolac resin is preferable. The reason therefor is such that it is excellent in electric properties, and can inhibit defects due to static. As the acryl-based resin, above all, three functional or more acrylate such as pentaerythritol tetra acrylate and dipenta erythritol tetra acrylate is preferable. The reason therefor is to improve photocurability. As the epoxy-based resin, an epoxy acrylate resin having a fluorene structure is preferable. The reason therefor is to improve the heat resistance, close adhesion, and chemical resistance. As the epoxy-based resin, a cardo epoxy resin is also preferable. The reason therefor is to impart excellent transparency, heat resistance, surface hardness, and flatness. In the organic material, substances such as a polymerization initiator and various additives may be included other than the resin.

Examples of the inorganic material may include an inorganic compound. Examples of the inorganic compound may include an oxide, an oxide nitride, a nitride, an oxide carbide, and oxide carbide nitride of metal element or non-metal element such as silicon, aluminum, magnesium, calcium, potassium, tin, sodium, titanium, boron, yttrium, zirconium, cerium, and zinc. In particular, silicon dioxide ($SiO_2$) is preferable. The inorganic compound may be used alone, and may be used by mixing the above described materials in an arbitrary ratio.

The protective layer and the high reflection layer are preferably directly in contact. Also, the refraction factor of the protective layer is preferably smaller than the refraction factor of the high reflection layer. The refraction factor of the protective layer is, for example, 1.1 or more and 3.0 or less, may be 1.1 or more and 1.65 or less, and may be 1.5 or more and 1.65 or less.

Note that the refraction factor is a refraction factor with respect to the light of the peak wavelength of the light source. The refraction factor is a value dividing the velocity of light in vacuum by the velocity of light in a substance (more accurately, phase velocity), and is an index for describing how light travels in the substance. Examples of the measurement method for the refraction factor may include a measurement method using an ellipsometer. The ellipsometer is an analyzing device that measures the change in the polarization of the incident light and the reflected light with respect to a sample.

It is preferable that the protective layer has water repellency. Even when water including a substance that may cause contamination adheres to the surface of the protective layer, by repelling the water, the substance that may cause contamination is removed as a result. Thus, degrade in the reflection coefficient due to the adhesion of a stain in the high reflection region can be prevented.

The contact angle of the protective layer in the present disclosure with respect to water is, for example, 50 degree or more and 90 degree or less, preferably 62 degree or more and 90 degree or less, and more preferably 73 degree or more and 90 degree or less.

When the contact angle with respect to water is in the above range, antifouling property improves. Meanwhile, when the contact angle with respect to water is smaller than the above range, water repellency is not sufficient, and there is a possibility that excellent antifouling property may not be obtained. Meanwhile, when the contact angle with respect to water is larger than the above range, when an organic layer is used in the low reflection layer, defects such as cissing at the time of application may occur, which may result in a cause of malfunction.

Here, the contact angle with respect to water is measured in accordance with the specification of JIS R3257:1999.

2. High reflection layer

The high reflection layer in the present disclosure has high reflectivity. Examples of such a high reflection layer may include a metal substrate, and a metal layer disposed on one surface of a substrate. Examples of the metal substrate may include a substrate made of stainless steel (hereinafter referred to as SUS), a substrate made of aluminum, and a substrate made of copper.

In the present disclosure, the substrate made of SUS is suitably used. Since SUS includes metal chrome, on the occasion of arranging the low reflection layer including metal chrome layer in a patterned shape directly on the substrate made of SUS, it is easily roughened by etching, and etching residue of the metal chrome is easily generated. For this reason, an effect by forming the protective layer, that is an effect of inhibiting surface roughness of the high reflection layer due to etching, and an effect of inhibiting the generation of the etching residue can be more remarkably obtained.

The lower limit of the thickness of such a metal substrate is preferably 0.05 or more, and particularly preferably 0.1 mm or more. Meanwhile, the upper limit of the thickness of the metal substrate is preferably 0.5 mm or less.

The high reflection layer in the present disclosure may be a metal layer disposed on one surface of a substrate.

Examples of the substrate used in this case may include glass and a resin. Also, other than the aforementioned, "metal different from a metal layer" may be used for the substrate. Among those, a glass substrate using glass is preferable. The reason therefor is that the linear expansion coefficient of glass is small, and the size change along with the temperature change in the environment of usage can be suppressed.

Also, the metal layer is preferably configured by a metal with high reflection coefficient. Examples of the metal may include chromium, silver, aluminum, rhodium, gold, copper, and alloys mainly composed of these metals. Among those, a metal chrome layer is preferable. The metal chrome layer is a layer configured by metal chrome.

The thickness of the metal layer is, for example, 0.05 $\mu$m or more and 0.3 $\mu$m or less, and may be 0.1 $\mu$m or more and 0.2 $\mu$m or less.

3. Low reflection layer

The low reflection layer in the present disclosure is arranged in a patterned shape on a surface of the protective layer that is opposite to the high reflection layer side. As the low reflection layer, the constitution is not particularly limited if the reflection coefficient of the light incident in the low reflection region is smaller than the reflection coefficient of the light incident in the high reflection region. For example, the low reflection layer may be an inorganic layer, and may be an organic layer.

In the present disclosure, it is preferable to include a three layer structure of, from the high reflection layer side, a metal chrome layer, and a chromium oxide layer and a chromium nitride layer formed in random order on the metal chrome layer. With such a low reflection layer, in any of the wavelength in the range of the wavelength region of 380 nm or more and 1000 mm or less, in particular, in the range of the wavelength region 500 nm or more and 1000 nm or less, the reflection coefficient of the light incident in the low reflection region can be lowered to, 10% or less, preferably 5% or less, and further, 1% or less. Meanwhile, the reflection coefficient of the low reflection region is, for example, 0% or more. In specific, the reflection coefficient of the low reflection region is, for example, 0% or more and 10% or less, preferably 0% or more and 5% or less, more preferably 0% or more and 1% or less, and particularly preferably 0% or more and 0.5% or less.

Note that the reflection coefficient of the low reflection region preferably satisfies the above described range at any of the angles in the range of the incident angle 0° to 70°. As a result, the difference between the reflection coefficient in the high reflection region and the reflection coefficient in the low reflection region can be increased. Also, by preparing only the metal chrome, the chromium oxide layer and the chromium nitride layer can be easily formed by using measures such as reactive sputtering. Further, patterning with high definition can be more easily performed compared to the silicon oxide layer.

In the present description, "the chromium oxide layer and the chromium nitride layer formed in random order on the metal chrome layer" means that it may be formed in the order of the metal chrome layer, the chromium oxide layer, and the chromium nitride layer, and may be formed in the order of the metal chrome layer, the chromium nitride layer, and the chromium oxide layer.

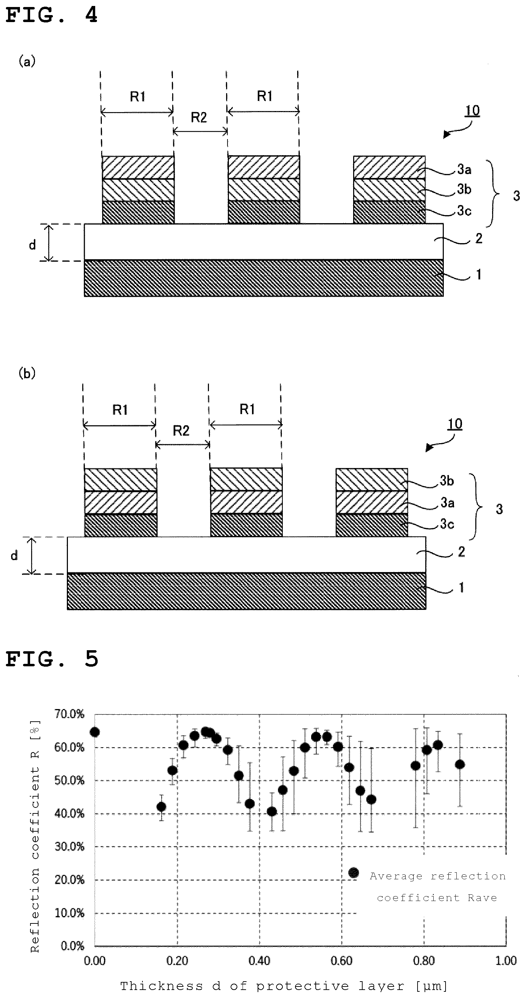

For example, the low reflection layer 3 of the reflective type optical scale for encoder 10 shown in FIG. 4 (a) includes, the metal chrome layer 3c, the chromium nitride layer 3b formed on the metal chrome layer 3c, and the chromium oxide layer 3a formed on the chromium nitride layer 3b. Meanwhile, the low reflection layer 3 of the reflective type optical scale for encoder 10 shown in FIG. 4 (b) includes, the metal chrome layer 3c, the chromium oxide layer 3a formed on the metal chrome layer 3c, and the chromium nitride layer 3b formed on the chromium oxide layer 3a.

The outermost surface of the low reflection region is, preferably a surface of the chromium oxide layer or the chromium nitride layer of the low reflection layer, and particularly preferably a surface of the chromium oxide layer. It is to more effectively decrease the reflection coefficient in the low reflection region.

Hereinafter, "the low reflection layer in which the metal chrome layer, the chromium nitride layer, and the chromium oxide layer are disposed in this order" is referred to as a low reflection layer in first specification, and "the low reflection layer in which the metal chrome layer, the chromium oxide layer, and the chromium nitride layer are disposed in this order" is referred to as a low reflection layer in second specification.

(i) Low reflection layer in first specification

In the low reflection layer in the present specification, from the substrate side, layers are disposed in the order of, the metal chrome layer, the chromium nitride layer, and the chromium oxide layer. In the low reflection region including the low reflection layer in the present specification, the reflection coefficient in any of the wavelength in the range of the wavelength region of 380 nm tor more and 1000 nm or less, particularly the wavelength region of 500 nm or more and 1000 nm or less of the light irradiated from the light source can be decreased to 5% or less, particularly 0.5% or less, and the change in the reflection coefficient with respect to the wavelength change is gentle, so that the control of the reflection coefficient is easy. In specific, the reflection coefficient can be decreased to 0% or more and 5% or less, in particular, 0% or more and 0.5% or less. Hereinafter, each layer will be described in details.

(a) Metal chrome layer

In the present specification, the metal chrome layer is arranged on the protective layer. The metal chrome layer is a layer configured by metal chrome. The metal chrome layer is a layer that does not substantially transmit the light irradiated from the light source, and the transmittance is preferably 1.0% or less. The transmittance can be measured using measures such as a spectrophotometer (MPC-3100) from Shimadzu Corporation. The layer thickness is, for example, 40 nm or more, and preferably 70 nm or more. In specific, the layer thickness is, for example, 40 nm or more and 500 nm or less, and preferably 70 nm or more and 200 nm or less.

Here, "thickness" of each member refers to a thickness obtained by a general measurement method. Examples of the measurement method of the thickness may include a stylus-type method of calculating the thickness by detecting unevenness by tracing the surface by a stylus, and an optical method of calculating the thickness based on the spectroscopic reflection spectrum. In specific, the thickness can be measured using a stylus-type layer thickness meter P-15 from KLA Corporation. Incidentally, as the thickness, the average value of the thickness measurement result in a plurality of points of a targeted member may be used.

As the method for forming the metal chrome layer, for example, a sputtering method, an ion plating method, and a physical vapor deposition method (PVD) such as a vacuum vapor deposition method may be used.

(b) Chromium nitride layer

The chromium nitride layer in the present specification is disposed between the metal chrome layer and the chromium oxide layer. The chromium nitride layer is different from chromium oxide nitride and chromium oxide nitride carbide, but the main component is chrome and nitrogen, and substantially does not contain impurities other than chrome and nitrogen.

As "x" that represents the atomic ratio of Cr and N of the chromium nitride ($CrN_x$) layer, it is preferably 0.4 or more and 1.1 or less.

Also, in the chromium nitride layer, when the whole layer is regarded as 100 atom%, the rate of chrome and nitrogen is in the range of 80% or more and 100% or less, and above all, preferably the purity in the range of 90% or more and 100% or less. As the impurities, for example, substances such as hydrogen, oxygen, and carbon may be included.

The layer thickness ($T_N$) of the chromium nitride layer is, preferably in the range of 5 nm or more and 100 nm or less, and particularly preferably in the range of 10 nm or more and 80 nm or less. Also, in the relation with the layer thickness ($T_O$) of the chromium oxide layer described later, when the wavelength is 850 nm, it is preferable that the total of $T_N$ and $T_O$ is 40 nm or more, and when the wavelength is 550 nm, it is preferable that the total of $T_N$ and $T_O$ is 20 nm or more. In this layer thickness range, compared to when out of the range, the reflection coefficient in the low reflection region can be easily decreased to 10% or less, particularly 5% or less. In specific, the reflection coefficient can be decreased to 0% or more and 10% or less, in particular, 0% or more and 5% or less. Further, the layer thickness ($T_N$) of the chromium nitride layer is preferably in the range of 10 nm or more and 80 nm or less in order to facilitate decreasing the reflection coefficient in the whole region from violet to infrared (about 380 nm or more and 1000 nm or less), particularly in the whole region from green to infrared (about 500 nm or more and 1000 nm or less).

As the method for forming chromium nitride, a reactive sputtering method, an ion plating method, and a physical vapor deposition method (PVD) such as a vacuum vapor deposition method may be used. On the occasion of using the reactive sputtering method, the chromium nitride layer can be formed by a reactive sputtering method using Cr target by introducing nitrogen into an argon (Ar) gas. On this occasion, the control of the composition of the chromium nitride layer can be performed by controlling the ratio of the Ar gas and the nitrogen gas.

(c) Chromium oxide layer

The chromium oxide layer is formed on the chromium nitride layer, the main component is chrome and oxygen, it is different from the chromium oxide nitride and the chromium oxide nitride carbide, and impurities other than chromium and oxygen are substantially not included.

As "y" representing the atomic ratio of Cr and O of the chromium oxide ($CrO_y$) layer, it is preferably 1.4 or more and 2.1 or less.

In specific, in the chromium oxide layer, when the whole layer is regarded as 100 atom%, the rate of chrome and oxygen is preferably in the range of 80% or more and 100% or less, and above all, it is preferably the purity in the range of 90% or more and 100% or less. As the impurities, substances such as hydrogen, nitrogen, and carbon may be included.

The layer thickness of the chromium oxide layer is not particularly limited, but preferably in the range of 5 nm or more and 100 nm or less, and particularly preferably in the range of 10 nm or more and 80 nm or less. Also, the layer thickness ($T_O$) of the chromium oxide is, preferably in the range with which the total layer thickness with the layer thickness ($T_N$) of the chromium nitride layer is in the range described in "(i) Low reflection layer in first specification (b) Chromium nitride layer" above. Further, the layer thickness ($T_O$) of the chromium oxide layer is preferably in the range of 10 nm or more and 65 nm or less to facilitate decreasing the reflection coefficient in the whole region from violet to infrared (about 380 nm or more and 1000 nm or less), particularly in the whole region from green to infrared (about 500 nm or more and 1000 nm or less).

As a method for forming chromium oxide, for example, a reactive sputtering method, an ion plating method, and a physical vapor deposition method (PVD) such as a vacuum vapor deposition method may be used. On the occasion of using the reactive sputtering method, the chromium oxide layer can be formed by introducing oxygen into an argon (Ar) gas, and by a reactive sputtering method using a Cr target. On this occasion, the control of the composition of the chromium oxide layer can be performed by controlling the ratio of the Ar gas and the oxygen gas.

(ii) Low reflection layer in second specification

In the low reflection layer in the present specification, from the protective layer side, layers are disposed in the order of, a metal chrome layer, a chromium oxide layer, and a chromium nitride layer. The low reflection region including the low reflection layer in the present specification can decrease the reflection coefficient in any of the wavelength in the range of the wavelength region of 380 nm or more and 1000 nm or less, particularly the wavelength region of 500 nm or more and 1000 nm or less of the light irradiated from the light source to 5% or less, and in particular, 1% or less. In specific, the reflection coefficient can be decreased to 0% or more and 5% or less, in particular, 0% or more and 1% or less. Hereinafter, each layer will be described in details.

(a) Metal chrome layer

The metal chrome layer in the present specification is formed on the substrate. The details of the metal chrome layer are the same as those described in "(i) Low reflection layer in first specification (a) Metal chrome layer" above; thus, the descriptions herein are omitted.

(b) Chromium oxide layer

The chromium oxide layer in the present specification is disposed between the metal chrome layer and the chromium nitride layer. The layer thickness is not particularly limited, but for example, it is preferably 5 nm or more and 60 nm or less, and particularly preferably in the range of 10 nm or more and 50 nm or less. Further, it is preferable to satisfy the relation with the layer thickness of the chromium nitride layer described later. This is to more certainly decrease the reflection coefficient in any of the wavelength in the range of the wavelength region of 380 nm or more and 1000 nm or less, particularly the wavelength region of 500 nm or more to 1000 nm or less of the low reflection region to 10% or less, and in particular, 5% or less. In specific, the reflection coefficient can be decreased to 0% or more and 10% or less, in particular, 0% or more and 5% or less.

Further, the layer thickness ($T_O$) of the chromium oxide layer is preferably in the range of 5 nm or more and 35 nm or less to facilitate decreasing the reflection coefficient in the whole region from violet to infrared (about 380 nm or more and 1000 nm or less), particularly in the whole region from green to infrared (about 500 nm or more and 1000 nm or less.

Details of other properties, composition and the method for forming the chromium oxide layer are the same as those described in "(i) Low reflection layer in first specification (c) Chromium oxide layer" above; thus, the descriptions herein are omitted.

(c) Chromium nitride layer

The chromium nitride layer in the present specification is formed on the chromium oxide layer. The layer thickness of the chromium nitride layer in the present specification is not particularly limited, but for example, it is preferably in the range of 5 nm or more and 100 nm or less, and particularly preferably in the range of 10 nm or more and 80 nm or less. Further, in the relation with the layer thickness ($T_O$) of the chromium oxide layer, it is preferable that, the total of $T_N$ and $T_O$ is 30 nm or more when the wavelength is 850 nm, and the total of $T_N$ and $T_O$ is 15 nm or more when the wavelength is 550 nm. Furthermore, the layer thickness ($T_N$) of the chromium nitride layer in the present specification is preferably in the range of 10 nm or more and 60 nm or less to facilitate decreasing the reflection coefficient in the whole region from violet to infrared (about 380 nm or more and 1000 nm or less), particularly in the whole region from green to infrared (about 500 nm or more and 1000 nm or less).

The method for forming the low reflection layer in the present disclosure is not particularly limited, but it can be produced by selective etching and lift-off. In specific, on the protective layer disposed on the high reflection layer, for example, the metal chrome layer is formed by means such as a sputtering method, and then the chromium nitride layer and the chromium oxide layer are formed. Next, the metal chrome layer, the chromium nitride layer and the chromium oxide layer are patterned by photo lithography and etching to produce the low reflection layer in a patterned shape. Example of the etching may include a dry etching by plasma etching configured to make a reaction gas including a chlorine gas and an oxygen gas into plasma by a high frequency electric field, and wet etching by a ceric ammonium nitrate solution.

Also, as another method, it can be formed by a method such that a resist pattern is formed on the protective layer, and then the metal chrome layer, the chromium nitride layer and the chromium oxide layer are formed using known vacuum layer producing method such as a sputtering method. After that, by removing the resist pattern, the metal chrome layer, the chromium nitride layer and the chromium oxide layer formed directly on the resist pattern are lifted off, and thereby the pattern of the chromium nitride layer and the chromium oxide layer is obtained.

4. Low reflection region

In the low reflection region in the present disclosure, the reflection coefficient in any of the wavelength in the range of the wavelength region 380 nm or more and 1000 nm or less, particularly the wavelength region 500 nm or more and 1000 nm or less is, for example, 10% or less, may be 5% or less, may be 2% or less, may be 1.5% or less, and may be 1% or less. In specific, the reflection coefficient of the low reflection region in the present disclosure is, for example, 0% or more and 10% or less, may be 0% or more and 5% or less, may be 0% or more and 2% or less, may be 0% or more and 1.5% or less, and may be 0% or more and 1% or less. Note that the reflection coefficient of the low reflection region preferably satisfies the above described range at any angles in the range of the incident angle 0° or more and 70° or less. The outermost surface of the low reflection region is, preferably a surface of the chromium oxide layer or the chromium nitride layer of the low reflection layer, and particularly preferably a surface of the chromium oxide layer. It is to more effectively decrease the reflection coefficient in the low reflection region.

5. High reflection region

The high reflection region in the present disclosure is a region where the above described protective layer is exposed, and the reflection coefficient of the light incident from the low reflection layer side of the reflective type optical scale for encoder is higher than that of the low reflection region.

In the high reflection region, when the incident light is any of the wavelength in the range of 380 nm or more and 1000 nm or more, particularly in the range of 500 nm or more and 1000 nm or less, in the case where the incident angle is in the range of 0° or more and 70° or less, the reflection coefficient is preferably 50% or more, and more preferably 60% or more. In specific, the reflection coefficient of the high reflection region in the present disclosure is, for example, 50% or more and 100% or less, and preferably 60% or more and 100% or less.

6. S/N ratio

Since the reflective type optical scale for encoder in the present disclosure is, as described above, capable of improving the reflection coefficient of the high reflection region, it is possible to increase the S/N ratio represented by the below formula.

S/N ratio = reflection coefficient of high reflection region / reflection coefficient of low reflection region

Incidentally, the reflection coefficient of the high reflection region and the reflection coefficient of the low reflection region in the above formula show a reflection coefficient of the same wavelength at the same incident angle.

In the present disclosure, the S/N ratio can be 30 or more, and above all, it can be 35 or more, preferably 40 or more, and particularly preferably 60 or more.

7. Optical scale

The optical scale in the present disclosure may be for a rotary encoder, and may be for a linear encoder. Among them, it is preferably for the rotary encoder. The shape of the optical scale in a plan view is not particularly limited, and for example, one used for the rotary encoder may be in an approximately donut shape, or an approximately circle shape, and one used for the linear encoder may be in an approximately rectangular shape.

A method for producing the optical scale in the present disclosure includes, for example, a step of preparing the above described high reflection layer, a step of forming the above protective layer on the high reflection layer, and a step of forming a low reflection layer in a patterned shape on a surface of the protective layer that is opposite side to the high reflection layer side.

A-2. Other embodiments of reflective type optical scale for encoder

The present disclosure includes other embodiments different from the embodiment of the reflective type optical scale for encoder described in "A-1. Reflective type optical scale for encoder" above.

1. First other embodiment

The first other embodiment in the present disclosure is a reflective type optical scale for encoder including: a high reflection layer, a protective layer including an organic material, and a low reflection layer arranged in a patterned shape, in a thickness direction, in this order, wherein there are a low reflection region that is a region where the high reflection layer, the protective layer, and the low reflection layer are arranged, and a high reflection region that is a region where the high reflection layer and the protective layer are arranged; a thickness of the protective layer is 0.16 $\mu$m or more and 1.0 $\mu$m or less; and when a wavelength of a measuring light source is regarded as 850 $\mu$m, a reflection coefficient in the high reflection region is 40% or more.

In the present embodiment, since the thickness of the protective layer is in the above described range, high reflection coefficient can be maintained even when the protective layer including the organic material is arranged on the high reflection layer.

In the present embodiment, the protective layer includes an organic material. The organic material is the same as that described in "A-1. Reflective type optical scale for encoder" above; thus, the descriptions herein are omitted.

Also, in the present embodiment, a thickness of the protective layer is 0.16 $\mu$m or more and 1.0 $\mu$m or less.

The lower limit of the thickness of the protective layer in the present embodiment is not particularly limited as long as it is 0.16 $\mu$m or more, but preferably 0.18 or more, and more preferably 0.20 $\mu$m or more. Also, the upper limit of the thickness of the protective layer is not particularly limited as long as it is 1.0 $\mu$m or less, but preferably 0.6 $\mu$m or less, and more preferably 0.33 $\mu$m or less.

In the present embodiment, the reflection coefficient in the high reflection region when the wavelength of the measuring light source is regarded as 850 $\mu$m is 40% or more, but preferably 45 or more, and particularly preferably 50% or more.

Details other than points related to the material of the protective layer, points related to the thickness of the protective layer, and points related to the reflection coefficient in the high reflection region when the wavelength of the measuring light source is regarded as 850 μm in the present embodiment are the same as those described in the section "A-1. Reflective type optical scale for encoder" above; thus, the descriptions herein are omitted.

2. Second other embodiment

The second other embodiment of the present disclosure is a reflective type optical scale for encoder including: a high reflection layer, a protective layer including an organic material, and a low reflection layer arranged in a patterned shape, in a thickness direction, in this order, wherein there are a low reflection region that is a region where the high reflection layer, the protective layer, and the low reflection layer are arranged, and a high reflection region that is a region where the high reflection layer and the protective layer are arranged; when a wavelength of a measuring light source is regarded as 850 μm, a reflection coefficient in the low reflection region is 2% or less, and S/N ratio shown in below formula is 30 or more.

S/N ratio = reflection coefficient of high reflection region / reflection coefficient of low reflection region

In the present embodiment, since the S/N ratio is 30 or more, that is, the difference between the reflection coefficient in the high reflection region and the reflection coefficient in the low reflection region is large, erroneous detection by the photodetector can be inhibited. As a result, it is easy for the reflective type optical encoder to read the optical scale, and excellent encoder properties may be achieved.

In the present embodiment, the protective layer includes an organic material. The organic material is the same as that described in "A-1. Reflective type optical scale for encoder" above; thus, the descriptions herein are omitted.

In the present embodiment, the S/N ratio is 30 or more, but more preferably 35 or more, and above all, preferably 40 or more, and particularly preferably 60 or more.

In the present embodiment, the reflection coefficient in the low reflection region when a wavelength of a measuring light source is regarded as 850 μm is not particularly limited as long as it is 2% or less, but preferably 1% or less, and particularly preferably 0.5% or less.

Details other than points related to the material of the protective layer, points related to the S/N ratio, and points related to the reflection coefficient in the low reflection region when the wavelength of the measuring light source is regarded as 850 μm in the present embodiment are the same as those described in the section "A-1. Reflective type optical scale for encoder" above; thus, the descriptions herein are omitted.

B. Reflective type optical encoder

The present disclosure provides a reflective type optical encoder characterized by including: the above described reflective type optical scale for encoder; a light source irradiating a measuring beam to a surface where the low reflection layer of the reflective type optical scale for encoder is disposed; and a photodetector detecting a reflected light from the reflective type optical scale for encoder. FIG. 2 (a) is a schematic perspective view showing an example of the reflective type optical encoder of the present disclosure. FIG. 2 (a) is described in "A. Reflective type optical scale for encoder" above; thus, the descriptions herein are omitted. Since the encoder of the present disclosure includes the above described reflective type optical scale for encoder, the difference between the reflection coefficient in the high reflection region and the reflection coefficient in the low reflection region is large, and thus erroneous detection of the photodetector 22 can be prevented. As a result, it is easy for the reflective type optical encoder 100 to read the optical scale 10, and excellent encoder properties are provided.

1. Reflective type optical scale for encoder

The reflective type optical scale for encoder is the same as that described in "A. Reflective type optical scale for encoder" above; thus, the descriptions herein are omitted.

2. Light source

Examples of the light source may include LED (light emitting diode) and laser. The wavelength λ of the light L1 irradiated from the light source is, for example, in the region from violet to infrared (about 380 to 1000 nm), and may be in the region from green to infrared (about 500 to 1000 nm). The incident angle of the light to the optical scale 10 is, for example, 0° or more and 70° or less.

The wavelength $\lambda$ of the light L1 of the light source used in the present disclosure is a wavelength about the same as the wavelength $\lambda$ of the light used for determining the thickness of the protective layer in "A. Reflective type optical scale for encoder" above.

3. Photodetector

The photodetector detects light reflected by the optical scale. The photodetector includes, for example, a light receiving element (such as a photoelectric converting element) such as a photodiode and an image element.

4. Others

The reflective type optical encoder in the present disclosure may include a fixing slit between the photodetector and the reflective type optical scale for encoder. By arranging the fixing slit, change in the light amount that the photodetector receives increases, and the detection sensitivity can be improved. The fixing slit may be arranged between the light source and the reflective type optical scale for encoder.

C-1. Layered body for reflective type optical scale for encoder

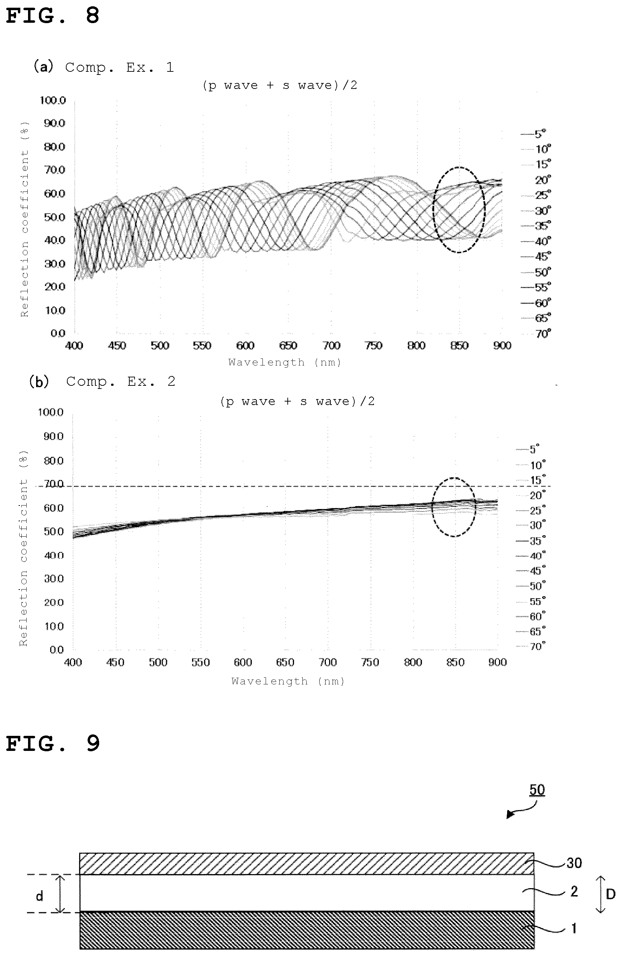

FIG. 9 is a schematic cross-sectional view of the layered body for reflective type optical scale for encoder in the present disclosure. The layered body for reflective type optical scale for encoder 50 shown in FIG. 9 is a layered body for reflective type optical scale for encoder for producing the above described reflective type optical scale for encoder, the layered body includes a high reflection layer 1, a protective layer 2, and a layer for forming a low reflection layer 30, in a thickness direction D, in this order, wherein when d ($\mu$m) designates a thickness of the protective layer, and $\theta$ (°) designates an incident angle of an incident light to the protective layer, below formula (1) is satisfied.

$$d = m\lambda \;/\; [2n \;*\; \cos\{\mathrm{Arcsin}(\sin\theta/n)\}] \qquad (1)$$

(In the formula, n is a refraction factor of the protective layer, $\lambda$ is a wavelength ($\mu$m) of the incident light, and m is a number satisfying $0 < m \le 0.3$ or $p\text{-}0.3 \le m \le p\text{+}0.3$ (p is an integer that is 1 or more and 3 or less.)

In such a layered body for reflective type optical scale for encoder, the thickness of the protective layer is in the specified range, and thus capable of producing the above described reflective type optical scale for encoder that can improve the reflection coefficient of the light incident in the high reflection region by patterning the layer for forming the low reflection layer. Further, since the m is in the range of larger than 0 and 0.3 or less, 0.7 or more and 1.3 or less, 1.9 or more and 2.3 or less, or 3.0 or more and 3.3 or less, variation of the reflection coefficient due to the positions of the high reflection region as described above can be reduced.

1. High reflection layer and protective layer

The high reflection layer and the protective layer in the present disclosure are in the same contents as those described in "A. Reflective type optical scale for encoder" above; thus, the descriptions herein are omitted.

2. Layer for forming low reflection layer

The layer for forming a low reflection layer in the present disclosure is a layer before performing the patterning for forming the low reflection layer in a patterned shape as described above, and is preferably arranged on the entire surface of the protective layer that is opposite side surface of the high reflection layer side. The layer constitution of the layer for forming the low reflection layer is the same as that of the low reflection layer in a patterned shape described above; thus, the descriptions herein are omitted.

C-2. Another embodiment of layered body for reflective type optical scale for encoder

The present disclosure includes another embodiment different from the layered body for reflective type optical scale for encoder described in "C-1. Layered body for reflective type optical scale for encoder" above.

The layered body for reflective type optical scale for encoder in the present embodiment is a layered body for reflective type optical scale for encoder for producing the above described reflective type optical scale for encoder, the layered body includes: a high reflection layer, and a protective layer, in a thickness direction, in this order, wherein when d ($\mu$m) designates a thickness of the protective layer, and $\theta$ (°) designates an incident angle of an incident light to the protective layer, below formula (1) is satisfied.

$$d = m\lambda \ / \ [2n \ * \ \cos\{\mathrm{Arcsin}(\sin\theta/n)\}] \qquad (1)$$

(In the formula, n is a refraction factor of the protective layer, $\lambda$ is a wavelength ($\mu$m) of the incident light, and m is a number satisfying $0 < m \leq 0.3$ or $p\text{-}0.3 \leq m \leq p\text{+}0.3$ (p is an integer that is 1 or more and 3 or less.)

The layered body for reflective type optical scale for encoder of the present embodiment is the same as the above described "C-1. Layered body for reflective type optical scale for encoder" excluding the points related to the layer for forming the low reflection layer; thus, the descriptions herein are omitted.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

Examples

The present disclosure will be hereinafter explained further with reference to Experimental Example A, Experimental Example B, Examples and Comparative Examples.

[Experimental Example A and Experimental Example B]

To a layered body including a metal chrome layer (refraction factor 3.2) as a high reflection layer, and an organic protective layer (refraction factor n = 1.58) having the thickness d ($\mu$m) on the high reflection layer as a protective layer, the reflection coefficients (respectively $R_0$, $R_{20}$, $R_{40}$, $R_{55}$) when a light having the wavelength $\lambda$ = 850 nm incidents at the incident angles $\theta$ ($\theta$ = 0°, 20°, 40°, and 55°) from the protective layer side, were calculated by a simulation.

On this occasion, the thickness d of the protective layer was a value in which the m was changed setting the incident angle $\theta$ = 0° in the below formula (1).

$$d = m\lambda \ / \ [2n \ * \ \cos\{\mathrm{Arcsin}(\sin\theta/n)\}] \qquad (1)$$

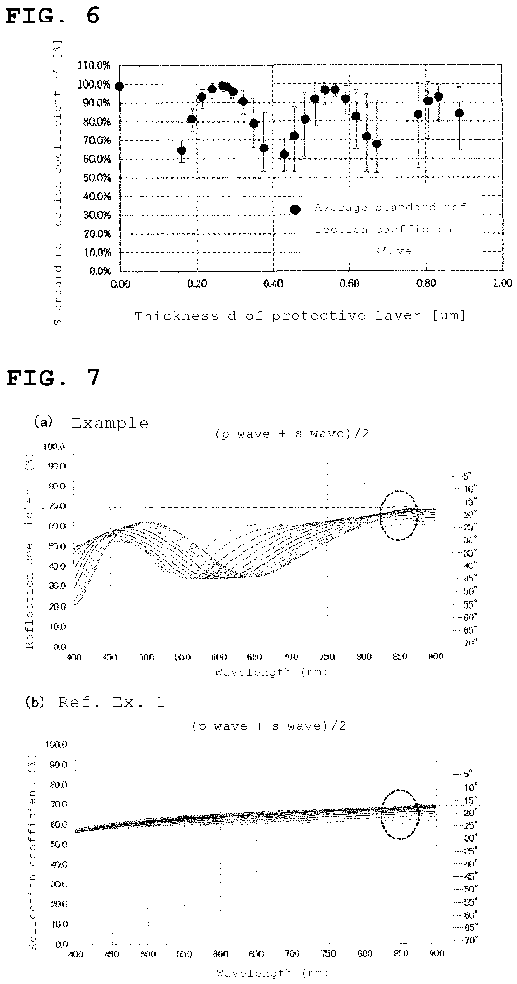

Also, the average value (average reflection coefficient $R_{ave}$) of $R_0$, $R_{20}$, $R_{40}$, and $R_{55}$, and the difference (reflection coefficient difference $\Delta R$) between the maximum reflection coefficient and the minimum reflection coefficient were calculated. Further, standard reflection coefficients ($R'_0$, $R'_{20}$, $R'_{40}$, and $R'_{55}$) , dividing $R_0$, $R_{20}$, $R_{40}$ and $R_{55}$ by the simulation reflection coefficient (65.3%) at $\theta$ = 0° when the protective layer was not arranged, the average value (average standard reflection coefficient $R'_{ave}$) of the standard reflection coefficients, and the difference (standard reflection coefficient difference $\Delta R'$) between the maximum standard reflection coefficient and the minimum reflection coefficient were calculated. It should be noted that the simulation reflection coefficient (65.3%) at $\theta$ = 0° when the protective layer was not arranged was a reflection coefficient by an ideal high reflection layer where the etching residue and the like was not remaining on the surface of the high reflection layer. The results are shown in Table 1 to Table 3. Also, a graph showing the relation between the thickness d ($\mu$m) of the protective layer and the average reflection coefficient $R_{ave}$ (%) is shown in FIG. 5. A graph showing the relation between the thickness d ($\mu$m) of the protective layer and the average standard reflection coefficient $R'_{ave}$ (%) is shown in FIG. 6.

[Table 1]

| No. | Exp. Ex. B | Experimental Example A | | | | | | | | Exp. Ex. B |
|---|---|---|---|---|---|---|---|---|---|---|
| | 1 | 1 | 2 | 3 | 4 | 6 | 7 | 8 | 9 | 2 |
| m | 0.6 | 0.7 | 0.8 | 0.9 | 1.0 | 1.04 | 1.1 | 1.2 | 1.3 | 1.4 |
| d[$\mu$m] | 0.16 | 0.19 | 0.22 | 0.24 | 0.27 | 0.28 | 0.30 | 0.32 | 0.35 | 0.38 |

(continued)

| No. | | Exp. Ex. B | Experimental Example A | | | | | | | | Exp. Ex. B |
|---|---|---|---|---|---|---|---|---|---|---|---|
| | | 1 | 1 | 2 | 3 | 4 | 6 | 7 | 8 | 9 | 2 |
| Reflection coefficient R | $\theta$ =0° | 45.7% | 56.8% | 63.6% | 65.6% | 65.2% | 64.2% | 60.6% | 54.9% | 43.4% | 34.8% |
| | $\theta$ =20° | 44.2% | 55.4% | 62.7% | 65.2% | 65.6% | 64.9% | 62.1% | 57.3% | 46.8% | 36.4% |
| | $\theta$ =40° | 40.6% | 51.4% | 59.7% | 63.1% | 65.3% | 65.3% | 64.4% | 61.9% | 55.3% | 45.3% |
| | $\theta$ =55° | 38.0% | 48.8% | 56.9% | 60.2% | 62.8% | 63.2% | 63.5% | 62.9% | 60.5% | 55.5% |
| Average reflection coefficient Rave | | 42.1% | 53.1% | 60.7% | 63.5% | 64.7% | 64.4% | 62.6% | 59.3% | 51.5% | 43.0% |
| Reflection coefficient difference ΔR | | 7.8% | 8.0% | 6.7% | 5.4% | 2.8% | 2.1% | 3.8% | 8.0% | 17.1% | 20.7% |
| Standard reflection coefficient R' | $\theta$ =0° | 70.0% | 86.9% | 97.3% | 100.4% | 99.8% | 98.2% | 92.8% | 84.1% | 66.4% | 53.3% |
| | $\theta$ =20° | 67.1% | 84.8% | 96.0% | 99.8% | 100.4% | 99.3% | 95.0% | 87.7% | 71.6% | 55.7% |
| | $\theta$ =40° | 62.1% | 78.7% | 91.4% | 96.6% | 100.0% | 100.0% | 98.5% | 94.8% | 84.7% | 69.3% |
| | $\theta$ =55° | 58.1% | 74.7% | 87.1% | 92.1% | 96.2% | 96.8% | 97.2% | 96.4% | 92.7% | 85.0% |
| Average standard reflection coefficient R'ave | | 64.5% | 81.3% | 93.0% | 97.2% | 99.1% | 98.6% | 95.9% | 90.7% | 78.8% | 65.8% |
| Standard reflection coefficient difference ΔR' | | 11.9% | 12.2% | 10.2% | 8.3% | 4.2% | 3.2% | 5.8% | 12.3% | 26.2% | 31.7% |

[Table 2]

| No. | | Exp. Ex. B | Experimental Example A | | | | | | | | Exp. Ex. 8 | |
|---|---|---|---|---|---|---|---|---|---|---|---|---|
| | | 3 | 10 | 11 | 12 | 13 | 14 | 15 | 16 | 4 | 5 |
| m | | 1.6 | 1.7 | 1.8 | 1.9 | 2.0 | 2.1 | 2.2 | 2.3 | 2.4 | 2.5 |
| d[$\mu$m] | | 0.43 | 0.46 | 0.48 | 0.51 | 0.54 | 0.56 | 0.59 | 0.62 | 0.65 | 0.67 |
| Reflection coefficient R | $\theta$ =0° | 46.3% | 57.2% | 62.1% | 65.7% | 65.1% | 62.4% | 54.4% | 42.8% | 34.7% | 36.3% |
| | $\theta$ =20° | 42.3% | 53.1% | 59.6% | 64.7% | 65.8% | 64.4% | 58.7% | 48.7% | 37.7% | 34.5% |
| | $\theta$ =40° | 34.8% | 42.8% | 50.1% | 58.8% | 63.8% | 65.2% | 64.7% | 60.9% | 53.5% | 46.7% |
| | $\theta$ =55° | 39.4% | 34.9% | 40.0% | 50.8% | 58.1% | 60.9% | 63.1% | 63.4% | 61.9% | 59.8% |
| Average reflection coefficient Rave | | 40.7% | 47.1% | 53.0% | 60.0% | 63.2% | 63.2% | 60.2% | 54.0% | 47.0% | 44.3% |
| Reflection coefficient difference ΔR | | 11.5% | 22.3% | 22.1% | 14.9% | 7.7% | 4.3% | 10.2% | 20.6% | 27.2% | 25.2% |

(continued)

| No. | | Exp. Ex. B | Experimental Example A | | | | | | | Exp. Ex. 8 | |
|---|---|---|---|---|---|---|---|---|---|---|---|
| | | 3 | 10 | 11 | 12 | 13 | 14 | 15 | 16 | 4 | 5 |
| Standard reflection coefficient R' | $\theta=0°$ | 70.9% | 87.6% | 95.1% | 100.5% | 99.6% | 95.5% | 83.3% | 65.6% | 53.1% | 55.6% |
| | $\theta=20°$ | 64.7% | 82.2% | 91.2% | 99.1% | 100.7% | 98.5% | 89.9% | 74.6% | 57.7% | 52.8% |
| | $\theta=40°$ | 53.3% | 65.5% | 76.7% | 90.1% | 97.7% | 99.8% | 99.0% | 93.2% | 81.9% | 71.5% |
| | $\theta=55°$ | 60.3% | 53.4% | 61.3% | 77.8% | 88.9% | 93.2% | 96.6% | 97.1% | 94.8% | 91.5% |
| Average standard reflection coefficient R'ave | | 62.3% | 72.2% | 81.1% | 91.9% | 96.7% | 96.8% | 92.2% | 82.6% | 71.9% | 67.9% |
| Standard reflection coefficient difference ΔR' | | 17.6% | 34.2% | 33.8% | 22.8% | 11.8% | 6.6% | 15.7% | 31.5% | 41.6% | 38.6% |

[Table 3]

| No. | | Experimental Example A | | | |
|---|---|---|---|---|---|
| | | 17 | 18 | 19 | 20 |
| m | | 2.9 | 3.0 | 3.1 | 3.3 |
| d[$\mu$m] | | 0.78 | 0.81 | 0.83 | 0.89 |
| Reflection coefficient R | $\theta=0°$ | 65.7% | 65.0% | 62.1% | 42.3% |
| | $\theta=20°$ | 64.2% | 65.9% | 64.9% | 50.7% |
| | $\theta=40°$ | 52.2% | 60.2% | 63.4% | 64.2% |
| | $\theta=55°$ | 35.9% | 46.1% | 52.6% | 62.4% |
| Average reflection coefficient Rave | | 54.5% | 59.3% | 60.7% | 54.9% |
| Reflection coefficient difference ΔR | | 29.8% | 19.8% | 12.2% | 21.9% |
| Standard reflection coefficient R' | $\theta=0°$ | 100.6% | 99.4% | 95.0% | 64.7% |
| | $\theta=20°$ | 98.2% | 100.9% | 99.3% | 77.5% |
| | $\theta=40°$ | 79.9% | 92.1% | 97.0% | 98.2% |
| | $\theta=55°$ | 55.0% | 70.5% | 80.6% | 95.5% |
| Average standard reflection coefficient R'ave | | 83.4% | 90.7% | 93.0% | 84.0% |
| Standard reflection coefficient difference ΔR' | | 45.7% | 30.3% | 18.7% | 33.5% |

As shown in Table 1 to Table 3, when the thickness d of the protective layer satisfied the above (1) (Experimental Example A), the average standard reflection coefficient R'ave was 72% or more, and it was confirmed that the decrease in the reflection coefficient was suppressed. Further, the standard reflection coefficient difference ΔR' of Experimental Examples A1 to 9 ($0.7 \leq m \leq 1.3$) with respect to Experimental Example B2 (m = 1.4) was small, and it was confirmed that the variation of the reflection coefficient of the light incident in the high reflection region was suppressed. Similarly, it was confirmed that the standard reflection coefficient difference ΔR' of Experimental Examples A12 to 16 ($1.9 \leq m \leq 2.3$) with respect to Experimental Example B4 (m = 2.4), Experimental Example B5 (m =2.5), Experimental Example A10 (m = 1.7), and Experimental Example A11 (m = 1.8) was small. It was confirmed that the standard reflection coefficient difference ΔR' of Experimental Examples A18 to 20 ($3.0 \leq m \leq 3.3$) with respect to Experimental Example A17 (m = 2.9) was small.

[Example]

First, a substrate made of SUS (thickness 400 $\mu$m) to which mirror processing was performed was prepared as a high reflection layer. Next, to the surface of the substrate made of SUS where the mirror processing was performed, a composition for forming protective layer including a cardo epoxy resin was applied and cured to form a protective layer having a thickness 0.27 $\mu$m and a refraction factor 1.58. Next, a low reflection layer including a metal chrome layer, a chromium nitride layer, and a chromium oxide layer in this order from the protective layer side, was formed in a patterned shape.

Thereby, a scale for evaluation was obtained.

The surface roughness, the glossiness (60° gloss value), and the reflection coefficient of the high reflection region of the obtained scale for evaluation were measured in the following manners. Also, the average value and range of the reflection coefficient were calculated. The results are shown in Table 4. It should be noted that the thickness (0.27 $\mu$m) of the protective layer was a value of m = 1.0 when the incident angle $\theta$ = 0°, and the wavelength of the incident light = 0.85 $\mu$m in the (1).

[Reflection coefficient]

The reflection coefficient was measured by a spectrophotometer "SolidSpec-3700 (product name)" from Shimadzu Corporation. On this occasion, the measuring wavelength was 850 nm, and (p polarized light + s polarized light)/2, and the incident angle (angle formed by a perpendicular line of the surface of the member for evaluation and a direction of the incident light) was 5° to 70°. Note that the irradiating beam size was about 6 mm * 15 mm.

[Surface roughness]

The arithmetic average roughness Ra, the maximum height Ry, and ten points average roughness Rz were measured in accordance with JIS B 0601-1994.

[Glossiness]

The 60° mirror glossiness was measured using HANDY GLOSSMETER PG-II (NIPPON DENSHOKU) in accordance with JIS Z 8741.

[Contact angle with respect to water]

Measurement was performed in accordance with the specification of JIS R3257:1999.
In the case of the mirror SUS without the protective layer, it was 31° (Comp. Ex. 2 of Table 4). In the case where the protective layer of the inorganic material was formed on the mirror SUS, it was 62°. In the case where the protective layer of the organic material was formed on the mirror SUS, it was 73° (Ex. 1 of Table 4), and 75° (Comp. Ex. 1 of Table 4), and the average contact angle of the specified thickness (0.16 $\mu$m or more and 1.0 $\mu$m or less) was 74.3°.

[Comparative Example 1]

A scale for evaluation was produced in the same manner as in Example 1 except that the thickness of the protective layer was changed to 1.0 $\mu$m, and the surface roughness, the glossiness, and the reflection coefficient of the high reflection region were measured. The results are shown in Table 4.
The thickness (1.0 $\mu$m) of the protective layer was a value of m = 3.7 when the incident angle $\theta$ = 0°, and the wavelength of the incident light = 0.85 $\mu$m in the (1).

[Comparative Example 2]

A substrate made of SUS (thickness 400 $\mu$m) to which mirror processing was performed was prepared as a high reflection layer. Next, without forming a protective layer, a metal chrome layer was formed. After that, etching by an acid was performed for 6 minutes, and the influence to the surface roughness of the high reflection layer by the etching was investigated. The surface roughness, the glossiness, and the reflection coefficient of the high reflection layer after the etching were measured. The results are shown in Table 4.

[Reference Examples 1 to 4]

To a high reflection layer (a substrate made of SUS to which mirror processing was performed), etching by an acid was performed for times as shown in Table 4, and the surface roughness, the glossiness, and the reflection coefficient of the high reflection layer after the etching were measured. The results are shown in Table 4.

[Table 4]

| | Layer constitution | Etching time [min] | Ra | Ry | Rz | Glossiness | Reflection coefficient [%] | Reflection coefficient (average) [%] | Reflection coefficient (range) [%] |
|---|---|---|---|---|---|---|---|---|---|
| Ex. 1 | Mirror SUS/ protective layer (0.27 μm) | - | 0.015 | 0.166 | 0.106 | 435 | 67.8~ 60.2 | 65.9 | 7.6 |
| Comp. Ex. 1 | Mirror SUS/ protective layer (1.0 μm) | - | 0.014 | 0.235 | 0.176 | 546 | 63.9~ 40.7 | 51.3 | 23.2 |
| Comp. Ex. 2 | Mirro SUS (Chrome layer etching) | 6 | 0.019 | 0.222 | 0.140 | 633 | 63.1-58.1 | 62.0 | 5.0 |
| Ref. Ex. 1 | Mirro SUS | - | 0.01 | - | - | 668 | 68.4~ 61.9 | 66.7 | 6.5 |
| Ref. Ex. 2 | Mirror SUS | 1 | 0.015 | 0.104 | 0.083 | 667 | 68.5~ 61.7 | 66.6 | 6.8 |
| Ref. Ex. 3 | Mirror SUS | 5 | 0.016 | 0.119 | 0.088 | 660 | 67.8~ 61.1 | 65.9 | 6.7 |
| Ref. Ex. 4 | Mirror SUS | 10 | 0.037 | 0.339 | 0.210 | 654 | 66.7~ 59.7 | 64.1 | 7.0 |

From the results of Table 4, it was confirmed that the reflection coefficient higher than that of Comparative Example 1 and Comparative Example 2 was obtained in Example

1. The residue of the metal chrome was confirmed after etching the metal chrome layer in Comparative Example 2, and it is presumed that the reflection coefficient was decreased due to the influence of this etching residue. Incidentally, the residue did not vanish even the etching time was extended.

Note that the irradiating beam size in the reflection coefficient measurement was about 6 mm * 15 mm, which was comparatively large, but the scale of the light receiving part (high reflection region) of the actual encoder is, for example, 100 μm or less, and usually about 50 μm and small. When the surface roughness of the high reflection layer is rough as in Comparative Example 2, it is supposed that the smaller the beam size, the more the reflection coefficient is deteriorated, and thus it is presumed that the effect of increasing the reflection coefficient by the present disclosure is further remarkably obtained in reality.

[Angle dependence evaluation of reflection coefficient]

To the high reflection regions of the scales for evaluations of Example, Comparative Example 1, Comparative Example 2, and Reference Example 1, the reflection coefficient was measured by changing the wavelength of the measuring light in 400 nm to 900 nm, and changing the incident angle in 5 ° to 70°. The results are shown in FIG. 7 (a) (Example), FIG. 7 (b) (Reference Example 1), FIG. 8 (a) (Comparative Example 1), and FIG. 8 (b) (Comparative Example 2).

As shown in FIG. 7 (a), the high reflection region in the scale for evaluation in Example had about the same reflection coefficient and incident angle dependency as those of Reference Example 1 (substrate made of mirror SUS). As shown in FIG. 8 (a), it was confirmed that the incident angle dependency of the reflection coefficient increased by a thin layer interference when the thickness of the protective layer was not controlled. As shown in FIG. 8 (b), it was confirmed that the reflection coefficient of the high reflection region decreased when the protective layer was not arranged. The reason therefor is presumably because the surface roughness of the high reflection layer after the etching was large.

That is, the present disclosure can provide the following inventions.

[1] A reflective type optical scale for encoder comprising: a high reflection layer, a protective layer, and a low reflection layer arranged in a patterned shape, in a thickness direction, in this order, wherein there are a low reflection region that is a region where the low reflection layer is arranged, and a high reflection region that is a region where the protective layer is exposed, and

when d ($\mu$m) designates a thickness of the protective layer, and $\theta$ (°) designates an incident angle of an incident light to the protective layer, below formula (1) is satisfied.

$$d = m\lambda / [2n * cos\{Arcsin(sin\theta/n)\}] \qquad (1)$$

(In the formula, n is a refraction factor of the protective layer, $\lambda$ is a wavelength ($\mu$m) of the incident light, and m is a number satisfying $0 < m \leq 0.3$ or $p-0.3 \leq m \leq p+0.3$ (p is an integer that is 1 or more and 3 or less.)

[2] The reflective type optical scale for encoder according to [1], wherein the m is in the range of, larger than 0 and 0.3 or less, 0.7 or more and 1.3 or less, 1.9 or more and 2.3 or less, or 3.0 or more and 3.3 or less.

[3] The reflective type optical scale for encoder according to [1] or [2], wherein the protective layer includes an organic material.

[4] The reflective type optical scale for encoder according to any one of [1] to [3], wherein the high reflection layer is a metal substrate.

[5] The reflective type optical scale for encoder according to any one of [1] to [4], wherein the low reflection layer includes, from the protective layer side, a metal chrome layer, and a chromium oxide layer and a chromium nitride layer disposed in random order.

[6] A reflective type optical encoder characterized by comprising: the reflective type optical scale for encoder according to any one of [1] to [5]; a light source irradiating the measuring beam to a surface where the low reflection layer of the reflective type optical scale for encoder is disposed; and a photodetector detecting a reflected light from the reflective type optical scale for encoder.

[7] A layered body for reflective type optical scale for encoder for producing the reflective type optical scale for encoder according to any one of [1] to [5], the layered body comprising: a high reflection layer, a protective layer, and a layer for forming a low reflection layer, in a thickness direction, in this order, wherein

when d ($\mu$m) designates a thickness of the protective layer, and $\theta$ (°) designates an incident angle of an incident light to the protective layer, below formula (1) is satisfied.

$$d = m\lambda / [2n * cos\{Arcsin(sin\theta/n)\}] \qquad (1)$$

(In the formula, n is a refraction factor of the protective layer, $\lambda$ is a wavelength ($\mu$m) of the incident light, and m is a number satisfying $0 < m \leq 0.3$ or $p-0.3 \leq m \leq p+0.3$ (p is an integer that is 1 or more and 3 or less.)

[8] A reflective type optical scale for encoder comprising:

a high reflection layer, a protective layer including an organic material, and a low reflection layer arranged in a patterned shape, in a thickness direction, in this order, wherein

there are a low reflection region that is a region where the high reflection layer, the protective layer, and the low reflection layer are arranged, and a high reflection region that is a region where the high reflection layer and the protective layer are arranged;

a thickness of the protective layer is 0.16 $\mu$m or more and 1.0 $\mu$m or less; and

when a wavelength of a measuring light source is regarded as 850 $\mu$m, a reflection coefficient in the high reflection region is 40% or more.

[9] A reflective type optical scale for encoder comprising:

a high reflection layer, a protective layer including an organic material, and a low reflection layer arranged in a patterned shape, in a thickness direction, in this order, wherein

there are a low reflection region that is a region where the high reflection layer, the protective layer, and the low reflection layer are arranged, and a high reflection region that is a region where the high reflection layer and the protective layer are arranged;

when a wavelength of a measuring light source is regarded as 850 μm, a reflection coefficient in the low reflection region is 2% or less, and

S/N ratio shown in below formula is 30 or more.

S/N ratio = reflection coefficient of high reflection --> region / reflection coefficient of low reflection region

[10] The reflective type optical scale for encoder according to [9], wherein

a thickness of the protective layer is 0.16 μm or more and 1.0 μm or less, and
when a wavelength of a measuring light source is regarded as 850 μm, a reflection coefficient in the high reflection region is 40% or more.

[11] The reflective type optical scale for encoder according to any one of [1] to [5], or any one of [8] to [10], wherein a contact angle of the protective layer to water is 50° or more and 90° or less.

[12] A layered body for reflective type optical scale for encoder for producing the reflective type optical scale for encoder according to any one of [1] to [5], or any one of [8] to [11], the layered body comprising:

a high reflection layer, and a protective layer, in a thickness direction, in this order, wherein
when d (μm) designates a thickness of the protective layer, and θ (°) designates an incident angle of an incident light to the protective layer, below formula (1) is satisfied.

$$d = m\lambda\ /\ [2n * \cos\{\mathrm{Arcsin}(\sin\theta/n)\}] \qquad (1)$$

(In the formula, n is a refraction factor of the protective layer, λ is a wavelength (μm) of the incident light, and m is a number satisfying $0 < m \leq 0.3$ or $p-0.3 \leq m \leq p+0.3$ (p is an integer that is 1 or more and 3 or less.)

Reference Signs List

| 1 | high reflection layer |
| 2 | protective layer |
| 3 | low reflection layer |
| 3a | chromium oxide layer |
| 3b | chromium nitride layer |
| 3c | metal chrome layer |
| 10 | reflective type optical scale for encoder |
| 50 | layered body for reflective type optical scale for encoder |
| 100 | reflective type optical encoder |

**Claims**

1. A reflective type optical scale for encoder comprising:

a high reflection layer, a protective layer, and a low reflection layer arranged in a patterned shape, in a thickness direction, in this order, wherein
there are a low reflection region that is a region where the low reflection layer is arranged, and a high reflection region that is a region where the protective layer is exposed, and
when d (μm) designates a thickness of the protective layer, and θ (°) designates an incident angle of an incident light to the protective layer, below formula (1) is satisfied.

$$d = m\lambda\ /\ [2n * \cos\{\mathrm{Arcsin}(\sin\theta/n)\}] \qquad (1)$$

(In the formula, n is a refraction factor of the protective layer, λ is a wavelength (μm) of the incident light, and m is a number satisfying $0 < m \leq 0.3$ or $p-0.3 \leq m \leq p+0.3$ (p is an integer that is 1 or more and 3 or less.)

2. The reflective type optical scale for encoder according to claim 1, wherein the m is in the range of, larger than 0 and 0.3 or less, 0.7 or more and 1.3 or less, 1.9 or more and 2.3 or less, or 3.0 or more and 3.3 or less.

3. The reflective type optical scale for encoder according to claim 1, wherein the protective layer includes an organic material.

4. The reflective type optical scale for encoder according to claim 1, wherein the high reflection layer is a metal substrate.

5. The reflective type optical scale for encoder according to claim 1, wherein the low reflection layer includes, from the protective layer side, a metal chrome layer, and a chromium oxide layer and a chromium nitride layer disposed in random order.

6. A reflective type optical encoder **characterized by** comprising:

   the reflective type optical scale for encoder according to any one of claim 1 to claim 5,
   a light source irradiating a measuring beam to a surface where the low reflection layer of the reflective type optical scale for encoder is disposed; and
   a photodetector detecting a reflected light from the reflective type optical scale for encoder.

7. A layered body for reflective type optical scale for encoder for producing the reflective type optical scale for encoder according to any one of claim 1 to claim 5, the layered body comprising:

   a high reflection layer, a protective layer, and a layer for forming a low reflection layer, in a thickness direction, in this order, wherein
   when d ($\mu$m) designates a thickness of the protective layer, and $\theta$ (°) designates an incident angle of an incident light to the protective layer, below formula (1) is satisfied.

   ```
   d = mλ / [2n * cos{Arcsin(sinθ/n)}]        (1)
   ```

   (In the formula, n is a refraction factor of the protective layer, $\lambda$ is a wavelength ($\mu$m) of the incident light, and m is a number satisfying $0 < m \le 0.3$ or $p-0.3 \le m \le p+0.3$ (p is an integer that is 1 or more and 3 or less.)

8. A reflective type optical scale for encoder comprising:

   a high reflection layer, a protective layer including an organic material, and a low reflection layer arranged in a patterned shape, in a thickness direction, in this order, wherein
   there are a low reflection region that is a region where the high reflection layer, the protective layer, and the low reflection layer are arranged, and a high reflection region that is a region where the high reflection layer and the protective layer are arranged;
   a thickness of the protective layer is 0.16 $\mu$m or more and 1.0 $\mu$m or less; and
   when a wavelength of a measuring light source is regarded as 850 $\mu$m, a reflection coefficient in the high reflection region is 40% or more.

9. A reflective type optical scale for encoder comprising:

   a high reflection layer, a protective layer including an organic material, and a low reflection layer arranged in a patterned shape, in a thickness direction, in this order, wherein
   there are a low reflection region that is a region where the high reflection layer, the protective layer, and the low reflection layer are arranged, and a high reflection region that is a region where the high reflection layer and the protective layer are arranged;
   when a wavelength of a measuring light source is regarded as 850 $\mu$m, a reflection coefficient in the low reflection region is 2% or less, and
   S/N ratio shown in below formula is 30 or more.

   S/N ratio = reflection coefficient of high reflection region / reflection coefficient of low reflection region

**10.** The reflective type optical scale for encoder according to claim 9, wherein

a thickness of the protective layer is 0.16 $\mu$m or more and 1.0 $\mu$m or less, and
when a wavelength of a measuring light source is regarded as 850 $\mu$m, a reflection coefficient in the high reflection region is 40% or more.

**11.** The reflective type optical scale for encoder according to any one of claim 1 to claim 5, or any one of claim 8 to claim 10, wherein a contact angle of the protective layer to water is 50° or more and 90° or less.

**12.** A layered body for reflective type optical scale for encoder for producing the reflective type optical scale for encoder according to any one of claim 1 to claim 5, or any one of claim 8 to claim 11, the layered body comprising:

a high reflection layer, and a protective layer, in a thickness direction, in this order, wherein
when d ($\mu$m) designates a thickness of the protective layer, and $\theta$ (°) designates an incident angle of an incident light to the protective layer, below formula (1) is satisfied.

$$d = m\lambda\ /\ [2n\ *\ \cos\{\mathrm{Arcsin}(\sin\theta/n)\}] \qquad (1)$$

(In the formula, n is a refraction factor of the protective layer, $\lambda$ is a wavelength ($\mu$m) of the incident light, and m is a number satisfying 0 < m $\leq$ 0.3 or p-0.3 $\leq$ m $\leq$ p+0.3 (p is an integer that is 1 or more and 3 or less.)

FIG. 1

(a)

(b)

## FIG. 2

(a)

(b)

# FIG. 3

(a) Incident angle at P1

(b) Incident angle at P2

# FIG. 4

(a)

(b)

# FIG. 5

# FIG. 6

# FIG. 7

(a) Example

(p wave + s wave)/2

(b) Ref. Ex. 1

(p wave + s wave)/2

# FIG. 8

(a) Comp. Ex. 1

(p wave + s wave)/2

(b) Comp. Ex. 2

(p wave + s wave)/2

# FIG. 9

## INTERNATIONAL SEARCH REPORT

| International application No. |
|---|
| **PCT/JP2023/034256** |

**A. CLASSIFICATION OF SUBJECT MATTER**

***G01D 5/347*** (2006.01)i
FI: G01D5/347 110C

According to International Patent Classification (IPC) or to both national classification and IPC

**B. FIELDS SEARCHED**

Minimum documentation searched (classification system followed by classification symbols)

G01D5/26-5/38

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2021/201024 A1 (DAI NIPPON PRINTING CO., LTD.) 07 October 2021 (2021-10-07) paragraphs [0044], [0058], [0068]-[0071], [0077]-[0083], fig. 2, 7 | 1-12 |
| Y | JP 2017-134073 A (DR. JOHANNES HEIDENHAIN GMBH) 03 August 2017 (2017-08-03) paragraphs [0013]-[0018], fig. 1 | 1-12 |
| Y | JP 2005-241248 A (ALONE CO., LTD.) 08 September 2005 (2005-09-08) paragraphs [0021]-[0024], fig. 3 | 4, 6-7, 11-12 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 November 2023** | **28 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/034256**

| Patent document cited in search report | | | Publication date (day/month/year) | Patent family member(s) | | | Publication date (day/month/year) |
|---|---|---|---|---|---|---|---|
| WO | 2021/201024 | A1 | 07 October 2021 | EP | 4130683 | A1 | |
| | | | | paragraphs [0047], [0063], [0075]-[0078], [0086]-[0094], fig. 2, 7 | | | |
| | | | | CN | 114450553 | A | |
| | | | | CN | 114674233 | A | |
| JP | 2017-134073 | A | 03 August 2017 | US | 2017/0211951 | A1 | |
| | | | | paragraphs [0014]-[0019], fig. 1 | | | |
| | | | | EP | 3199919 | A2 | |
| | | | | DE | 102016201068 | A1 | |
| | | | | CN | 106996798 | A | |
| JP | 2005-241248 | A | 08 September 2005 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005241248 A

- WO 2021201024 A